# EUROPÄISCHE PATENTANMELDUNG

(11) **EP 1 816 505 A1**
(43) Veröffentlichungstag der Anmeldung: **08.08.2007**
(21) Anmeldenummer: 07101414.6
(22) Anmeldetag: 30.01.2007
(51) Int. Cl.: G02C 7/14

(54) **Einrichtung zur Erleichterung des Sehens**

(30) Priorität: 02.02.2006 DE 202006001791 U
(71) Anmelder: Vogler, Johann, 87561 Oberstdorf (DE)
(72) Erfinder: Vogler, Johann, 87561 Oberstdorf (DE)
(74) Vertreter: Hutzelmann, Gerhard

(57) **Zusammenfassung**

Einrichtung(1,31) zur Erleichterung des Sehens in für das menschliche Auge extremen Blickwinkeln, wobei die Einrichtung eine Vorrichtung(5) zum Ablenken des Sehstrahls für wenigstens ein Auge um einen Winkel aufweist.

## Beschreibung

Die Erfindung bezieht sich auf eine Einrichtung zur Erleichterung des Sehens in für das menschliche Auge extremen Blickwinkeln.

Gerade bei verschiedenen Sportarten, wie zum Beispiel Mountainbiken, Rennradfahren usw. aber auch bei vielen Arbeiten muss der Kopf um eine gute Sicht zu erreichen in eine unnatürliche Stellung gebracht werden.

Diese unnatürliche Stellung führt wenigstens auf längere Sicht zu erheblichen gesundheitlichen Problemen durch Schädigung der Halswirbelsäule und der Muskulatur.

Aufgabe der Erfindung ist es, eine Einrichtung zur Erleichterung des Sehens vorzuschlagen, die eine aus gesundheitlicher Sicht passende Kopfhaltung ermöglicht.

Diese Aufgabe wird dadurch gelöst, daß die Einrichtung eine Vorrichtung zum Ablenken des Sehstrahls für wenigstens ein Auge um einen Winkel aufweist.

Hierdurch wird es ermöglicht, eine entspannte und unschädliche Kopfhaltung einzunehmen.

Es hat sich gemäß einer Weiterbildung der Erfindung auch als äußerst vorteilhaft erwiesen, wenn ein optisches Element vorgesehen ist, welches den Sehstrahl abzulenken vermag.

Durch den Einsatz eines optischen Elementes ist die Einrichtung äußerst flexibel einsetzbar.

Sehr vorteilhaft ist es auch, wenn das optische Element wenigstens ein Prisma oder eine Prismenanordnung enthält.

Ein Prisma hat sich als besonders vorteilhaft zur Ablenkung eines Sehstrahls um einen bestimmten Winkel erwiesen.

Eine weitere sehr vorteilhafte Ausgestaltung der Erfindung liegt auch dann vor, wenn mehrere Prismen hintereinander angeordnet sind.

Hierdurch lassen sich auch ausgefallene Ablenkwinkel und Ablenkrichtungen realisieren.

Eine sehr vorteilhafte Weiterbildung der Erfindung liegt auch darin, daß mehrere Prismen riegelförmig angeordnet sind.

Ebenfalls als sehr vorteilhaft hat es sich erwiesen, wenn mehrere riegelförmig nebeneinander angeordnete Prismen nochmals ineinandergreifend angeordnet sind.

Damit lassen sich mehrere Prismen äußerst platzsparend anordnen.

Eine weitere sehr vorteilhafte Ausgestaltung der Erfindung liegt auch darin, daß pyramidenförmige Prismen vorgesehen sind.

Es hat sich auch als sehr vorteilhaft erwiesen, wenn die Prismen zylinderförmig bzw. teilzylinderförmig ausgebildet sind.

Durch derartige geometrische Gestaltungen lassen sich ganz spezielle Ablenkungen erzielen.

Eine äußerst vorteilhafte Ausgestaltung der Erfindung liegt auch dann vor, wenn achromatische und geradsichtige Prismen vorgesehen sind.

Es hat sich auch als sehr vorteilhaft erwiesen, wenn wenigstens ein Element zur Korrektur von optischen Abbildungsfehlern vorgesehen ist.

Hierdurch lassen sich gezielt Abbildungsfehler, wie zum Beispiel chromatische Aberration erzeugen und korrigieren.

Erfindungsgemäß hat es sich auch als sehr vorteilhaft erwiesen, wenn das optische Element wenigstens eine Fokusierlinse enthält.

Hierdurch lassen sich auch Sehfehler der Trägers der Vorrichtung unter Umständen korrigieren.

Sehr vorteilhaft ist es erfindungsgemäß auch, wenn das optische Element eine Vergrößerungsoptik enthält.

Damit ergibt sich auch die Möglichkeit, die Vorrichtung beim Betrachten besonders kleiner Objekte einzusetzen. Der Einsatz einer getrennten und zusätzlichen Vergrößerungsoptik wird dadurch vermieden.

Eine weitere sehr vorteilhafte Ausgestaltung der Erfindung liegt auch dann vor, wenn das optische Element mit einer Vorrichtung versehen ist, die eine Einstellung des Ablenkwinkels erlaubt.

Dadurch lässt sich die Einrichtung besonders vielseitig einsetzen.

Es hat sich erfindungsgemäß auch als äußerst vorteilhaft erwiesen, wenn das optische Element eine Halteeinrrichtung aufweist.

Eine derartige Halteeinrichtung ermöglicht den universellen Einsatz der Einrichtung.

Dabei hat es sich als sehr vorteilhaft erwiesen, wenn das optische Element an einer Brille, einem Visier oder dergleichen angeordnet ist.

Damit wird es einem Benutzer der Einrichtung ermöglicht, diese besonders leicht einzusetzen.

Als besonders vorteilhaft hat es sich erwiesen, wenn das optische Element in die Brille, das Visier oder dergleichen integriert ist.

Ebenfalls als äußerst vorteilhaft hat es sich erwiesen, wenn das optische Element derart ausgebildet ist, daß es nur einen Teilbereich der Brille, des Visiers oder dergleichen einnimmt.

Durch alle diese Ausgestaltungen wird eine besonders einfache Handhabung sichergestellt.

Eine weitere äußerst vorteilhafte Ausgestaltung der Erfindung ist auch darin zu sehen, daß das optische Element als Vorsatz für eine Brille oder dergleichen ausgebildet ist.

Dadurch kann die Einrichtung auch kurzzeitig eingesetzt werden. Die Korrektur einer eventuellen Fehlsichtigkeit des Benutzers wird durch die normale Brille ausgeglichen.

Im folgenden wird die Erfindung anhand eines Ausführungsbeispiels veranschaulicht.

Dabei zeigen:
- Fig. 1: eine Ansicht einer Brille mit integrierter erfindungsgemäßer Einrichtung
- Fig. 2: eine Seitenansicht derselben Brille
- Fig. 3: eine Seitenansicht eines Helms, bei dem im Visier die erfindungsgemäße Einrichtung vorgesehen ist
- Fig. 4: eine schematische Darstellung der Wirkungsweise der erfindungsgemäßen Einrichtung
- Fig. 5: eine mögliche Anordnung mehrerer riegelförmig ausgebildeter Prismen in der Einrichtung
- Fig. 6: eine weitere mögliche Anordnung riegelförmig ausgebildeter Prismen.

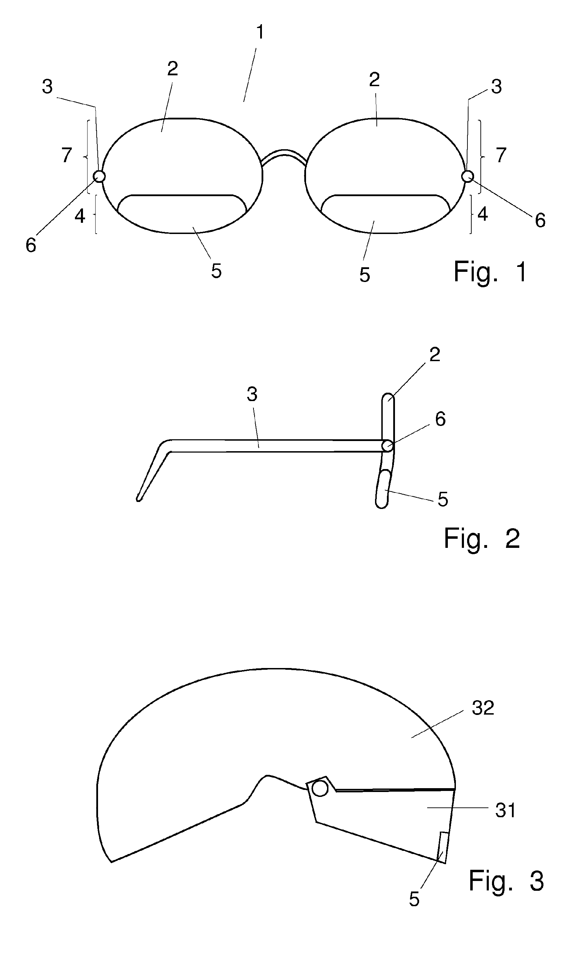

Mit 1 ist in Fig. 1 eine Brille bezeichnet, die zwei Gläser 2 und zwei Bügel 3 aufweist. In den Gläsern 2 ist jeweils ein Bereich 4 vorgesehen, der eine Einrichtung 5 zum Ablenken eines Sehstrahls um einen vorgegebenen Winkel enthält.

Zwischen den Bügeln 3 und dem jeweiligen Glas 2 ist jeweils eine gelenkige Verbindung 6 angeordnet, die einerseits ein Einklappen der Bügel 3 ermöglicht und andererseits auch eine Justierung der Winkels der Gläser zu einem Sehstrahl bzw. relativ zum Auge eines Benutzers zulässt.

Durch diese Justiermöglichkeit kann die effektive Ablenkung des Sehstrahls eingestellt werden.

Der Bereich 4 nimmt nur einen Bruchteil der gesamten Ausdehnung der Gläser 2 ein. Es verbleibt noch ein Bereich 7, durch den hindurch ohne Ablenkung des Sehstrahles hindurchgesehen werden kann.

Nimmt nun ein Radfahrer, Bobfahrer oder dergleichen eine aus Sicht für seine Halswirbelsäule eine optimale Haltung ein, so sieht er bei normalem Blickwinkel direkt auf die Straße und kann nicht sehen, was vor ihm passiert bzw. wohin er fahren muss. Um nun nach vorne zu schauen, ist es im Normalfall notwendig den Kopf zu heben und nach vorne zu sehen. Hierdurch wird aber die Halswirbelsäule extrem unnatürlich belastet, wodurch es einerseits hier zu Verspannungen und Schädigungen kommen kann und andererseits auch die Gefahr von Bandscheibenvorfällen steigt.

Desweiteren wird durch dieses Heben des Kopfes der optimale Kraftfluß gestört und der Windwiderstand erhöht.

Blickt der Fahrer nun durch den Bereich 4 der Gläser 2, so wird der dort hindurchgehende Sehstrahl abgelenkt und in Vorausrichtung geleitet.

Deswegen kann die aus ergonomischen und gesundheitlichen Gründen optimale Haltung beibehalten werden, ohne den Blick nach vorne einzubüsen.

Zur Anpassung an die jeweils optimale Körperhaltung kann die Neigung der Gläser 2 gegenüber den Bügeln 3 eingestellt werden und so die Ablenkung des Sehstrahles justiert werden.

Die Brille 1 kann dabei als Schutzbrille, Sonnenbrille oder aber auch als Brille zur Korrektur von Fehlsichtigkeiten ausgebildet sein.

Je nach Einsatzgebiet sind unterschiedliche Ablenkwinkel denkbar. So ist es zum Beispiel für einen Radfahrer optimal, wenn der Ablenkwinkel zwischen 60 und 80° beträgt. Bei einem Bobfahrer, der zur Minimierung des Windwiderstandes nach Möglichkeit flach auf dem Rücken liegen sollte, ist dagegen eine Ablenkung des Sehstrahles um 90° notwendig. Diese beiden Anwendungen unterscheiden sich zudem dadurch, daß beim Radfahrer der Sehstrahl nach oben abgelenkt werden muss und beim Bobfahrer nach unten.

Beide Versionen sind bei entsprechender Auslegung der Einrichtung 5 jedoch realisierbar.

Es ist auch denkbar, daß eine derartige Einrichtung 5 auch in das Visier 31 eines Schutzhelmes 32 eingearbeitet sein kann. Dort erfüllt die Einrichtung 5 dieselbe Funktion wie in Form einer Brille 1.

Bei dieser Ausgestaltung nimmt die Einrichtung 5 wiederum nur einen Teilbereich des Visiers 31 ein, so daß neben dem abgelenkten Blick es auch möglich ist, normal zu sehen.

Die Einrichtung 5 kann dabei, wie beschrieben, in ein Brillenglas 2 oder ein Visier 31 eingearbeitet sein. Es ist aber auch denkbar, daß die Einrichtung als zusätzliches Teil zum Beispiel dem Brillenglas 2 oder dem Visier 31 vorgesetzt wird.

Es ist desweiteren auch denkbar, daß die Einrichtung 5 nicht nur auf Ablenkung des Sehstrahles nach oben oder nach unten beschränkt ist. Es ist durchaus denkbar, daß die Ablenkung je nach Einsatzzweck auch seitlich erfolgt.

Es ist in diesem Zusammenhang auch denkbar, daß eine Einrichtung 5 auch zum Beispiel bei bestimmten Operationen eingesetzt wird, um ein ermüdungsfreies Arbeiten für den Operateur zu gewährleisten. Beispielsweise bei Untersuchungen und Operationen eines HNO-Arztes verhilft die Einrichtung 5 zu einer ermüdungsfreien und unverkrampften Körperhaltung. Auch bei anderen Tätigkeiten ist der Einsatz der Einrichtung 5 denkbar.

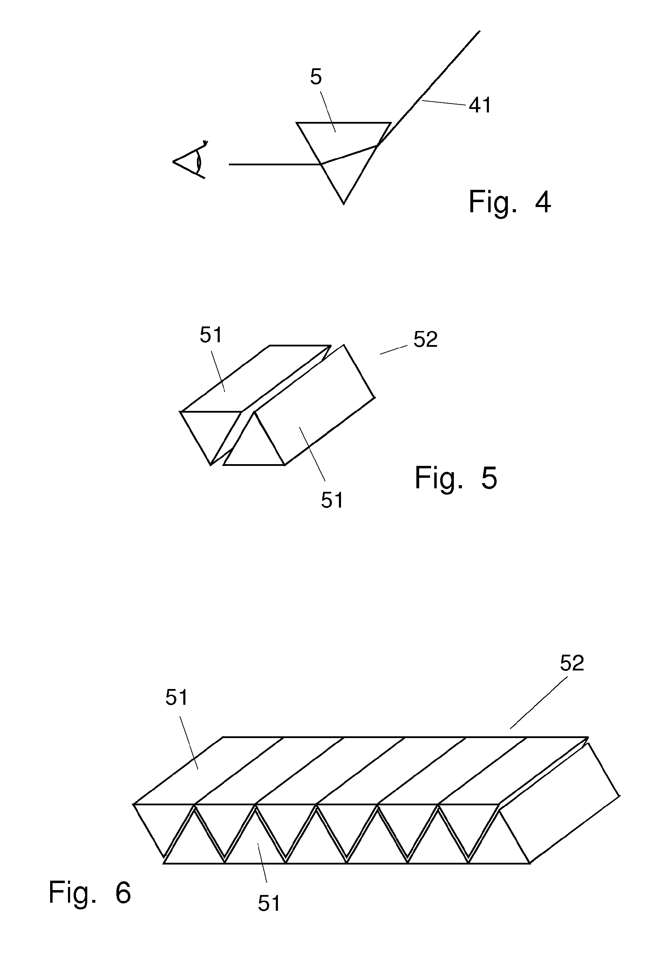

Die Ablenkung eines Sehstrahles 41 kann -wie in Fig. 4 schematisch dargestellt- um einen vorbestimmten Winkel nach oben erfolgen. Wie allerdings bereits ausgeführt, ist auch die Ablenkung in andere Richtungen und um andere Winkel denkbar. Es ist sogar denkbar, daß durch eine entsprechende Ausgestaltung der Einrichtung 5 der Ablenkwinkel wenigstens in gewissen Grenzen einstellbar ist.

Die Einrichtung 5 kann -wie in Fig. 5 skizziert- aus einer Anordnung eines oder mehrerer Prismen 51 bestehen. Mehrere Prismen 51 können dabei riegelförmig ausgebildet sein und mehrfach nebeneinander zu einer Prismenbatterie 52 verbunden sein.

Es ist aber auch denkbar, daß in die verbleibenden Hohlräume weitere Prismen 53 eingesetzt werden, die die vormals verbliebenen Hohlräume auszufüllen vermögen.

Durch eine Kombination mehrerer Prismen 51 hintereinander, die der Sehstrahl durchläuft, ist es möglich, bewußt optische Abbildungsfehler zu erzeugen. So ist es denkbar, durch eine geeignete Materialwahl für die Prismen 51 zum Beispiel gezielt eine chromatische Aberration zu erzeugen. Andererseits ist es auch denkbar, daß durch eine enstprechende Materialwahl und/oder Anordnung optische Fehler wenigstens teilweise bereinigt werden.

Denkbar ist zum Beispiel der Einsatz von Kronglas und Flintglas, wodurch eine achromatische Abbildung erzielt werden kann.

Hierzu können neben der geeigneten Materialwahl auch andere optische Elemente der Einrichtung 5 hinzugefügt sein.

Es ist dabei denkbar, daß Fokusierlinsen, Vergrößerungsoptiken, Spiegel oder dergleichen vorgesehen sind, die einerseits Abbildungsfehler bereinigen können und andererseits eine Bildumkehr ermöglichen.

Durch eine Kombination spezieller Prismen und eines Spiegels ist es damit auch möglich, eine unerwünschte Bildumkehr wieder auszugleichen.

Es ist aber auch denkbar, daß die Einrichtung 5 auch Elemente enthält um eine Fehlsichtigkeit eines Benutzers wie eine entsprechende Brille und/oder Kontaktlinse auszugleichen.

## Patentansprüche

1. Einrichtung(1,31) zur Erleichterung des Sehens in für das menschliche Auge extremen Blickwinkeln, **dadurch gekennzeichnet, daß** die Einrichtung eine Vorrichtung(5) zum Ablenken des Sehstrahls für wenigstens ein Auge um einen Winkel aufweist.

2. Einrichtung nach Anspruch 1, **dadurch gekennzeichnet, daß** ein optisches Element(5) vorgesehen ist, welches den Sehstrahl abzulenken vermag.

3. Einrichtung nach Anspruch 2, **dadurch gekennzeichnet, daß** das optische Element(5) wenigstens ein Prisma(51) oder eine Prismenanordnung(52) enthält.

4. Einrichtung nach Anspruch 3, **dadurch gekennzeichnet, daß** mehrere Prismen(51) hintereinander angeordnet sind.

5. Einrichtung nach Anspruch 3 oder 4, **dadurch gekennzeichnet, daß** mehrere Prismen(51) riegelförmig angeordnet sind.

6. Einrichtung nach Anspruch 3, 4 oder 5, **dadurch gekennzeichnet, daß** mehrere riegelförmig nebeneinander angeordnete Prismen(51) nochmals ineinandergreifend angeordnet sind.

7. Einrichtung nach einem der Ansprüche 3 bis 6, **dadurch gekennzeichnet, daß** pyramidenförmige Prismen vorgesehen sind.

8. Einrichtung nach einem der Ansprüche 3 bis 7, **dadurch gekennzeichnet, daß** die Prismen zylinderförmig bzw. teilzylinderförmig ausgebildet sind.

9. Einrichtung nach einem der vorangehenden Ansprüche, **dadurch gekennzeichnet, daß** achromatische und geradsichtige Prismen(51) vorgesehen sind.

10. Einrichtung nach einem der vorangehenden Ansprüche, **dadurch gekennzeichnet, daß** wenigstens ein Element zur Korrektur von optischen Abbildungsfehlern vorgesehen ist.

11. Einrichtung nach einem der vorangehenden Ansprüche, **dadurch gekennzeichnet, daß** das optische Element wenigstens eine Fokusierlinse enthält.

12. Einrichtung nach einem der vorangehenden Ansprüche, **dadurch gekennzeichnet, daß** das optische Element eine Vergrößerungsoptik enthält.

13. Einrichtung nach einem der vorangehenden Ansprüche, **dadurch gekennzeichnet, daß** das optische Element(5) mit einer Vorrichtung(6) versehen ist, die eine Einstellung des Ablenkwinkels erlaubt.

14. Einrichtung nach einem der vorangehenden Ansprüche, **dadurch gekennzeichnet, daß** das optische Element(5) eine Halteeinrichtung aufweist.

15. Einrichtung nach Anspruch 14, **dadurch gekennzeichnet, daß** das optische Element an einer Brille(1), einem Visier(31) oder dergleichen angeordnet ist.

16. Einrichtung nach Anspruch 15, **dadurch gekennzeichnet, daß** das optische Element in die Brille(1), das Visier(31) oder dergleichen integriert ist.

17. Einrichtung nach Anspruch 15 oder 16, **dadurch gekennzeichnet, daß** das optische Element(5) derart ausgebildet ist, daß es nur einen Teilbereich der Brille(1), des Visiers(31) oder dergleichen einnimmt.

18. Einrichtung nach einem der vorangehenden Ansprüche, **dadurch gekennzeichnet, daß** das optische Element(5) als Vorsatz für eine Brille oder dergleichen ausgebildet ist.
